(19) Europäisches Patentamt
European Patent Office
Office européen des brevets

(11) EP 4 411 924 B1

(12) EUROPEAN PATENT SPECIFICATION

(45) Date of publication and mention of the grant of the patent:
**01.07.2026 Bulletin 2026/27**

(21) Application number: **22875930.4**

(22) Date of filing: **20.09.2022**

(51) International Patent Classification (IPC):
***H01M 10/0567*** (2010.01) ***H01M 4/36*** (2006.01)
***H01M 4/38*** (2006.01) ***H01M 4/48*** (2010.01)
***H01M 4/58*** (2010.01) ***H01M 4/587*** (2010.01)
***H01M 10/0568*** (2010.01) ***H01M 10/0569*** (2010.01)
***H01M 10/0525*** (2010.01) ***H01M 4/134*** (2010.01)

(52) Cooperative Patent Classification (CPC):
**H01M 4/134; H01M 4/364; H01M 4/386; H01M 4/587; H01M 10/0525; H01M 10/0567; H01M 10/0568; H01M 10/0569;** H01M 2300/0034; Y02E 60/10

(86) International application number:
**PCT/JP2022/034977**

(87) International publication number:
**WO 2023/054060 (06.04.2023 Gazette 2023/14)**

# (54) NONAQUEOUS ELECTROLYTE SECONDARY BATTERY

SEKUNDÄRBATTERIE MIT NICHTWÄSSRIGEM ELEKTROLYTEN

BATTERIE RECHARGEABLE À ÉLECTROLYTE NON AQUEUX

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.09.2021 JP 2021160355**

(43) Date of publication of application:
**07.08.2024 Bulletin 2024/32**

(73) Proprietor: **Panasonic Intellectual Property Management Co., Ltd.**
**Kadoma-shi, Osaka 571-0057 (JP)**

(72) Inventor: **WATARIGAWA, Shohei**
**Kadoma-shi, Osaka 571-0057 (JP)**

(74) Representative: **Novagraaf International SA**
**Chemin de l'Echo 3**
**1213 Onex, Geneva (CH)**

(56) References cited:
**WO-A1-2016/103657**
**JP-A- 2007 141 494**
**KR-A- 20130 079 126**
**KR-A- 20160 034 183**
**US-A1- 2017 317 380**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 411 924 B1

## Description

[Technical Field]

The present disclosure relates to a non-aqueous electrolyte secondary battery.

[Background Art]

A non-aqueous electrolyte secondary battery typified by a lithium ion secondary battery includes a positive electrode, a negative electrode, and a non-aqueous electrolyte. The negative electrode includes a negative electrode mixture including a negative electrode active material. A material capable of electrochemically absorbing and desorbing lithium ions is used as the negative electrode active material. As such a material, a carbonaceous material is often used. As the non-aqueous electrolyte, a solution containing a non-aqueous solvent and a lithium salt is often used, and an additive may in some cases be added thereto.

Patent Literature 1 proposes a non-aqueous electrolyte secondary battery including: a positive electrode including a positive electrode active material including a lithium-containing transition metal oxide with a rare-earth compound attached to a surface thereof; a negative electrode including a negative electrode active material including silicon oxide represented by $SiO_X$ where $0.8 \leq X \leq 1.2$) and graphite; and a non-aqueous electrolyte including a solvent and a solute, and to which a cyclic ether compound is added.

Patent Literature 2 proposes an electrolyte containing an electrolytic solution including at least one selected from the group consisting of paraldehyde and derivatives thereof. Patent Literature 3 discloses a non-aqueous electrolyte secondary battery.

[Citation List]

[Patent Literatures]

Patent Literature 1: WO 2014/049931
Patent Literature 2: Japanese Laid-Open Patent Publication No. 2007-141494
Patent Literature 3: U.S. Patent Application Publication No. 2017/317380 A1

[Summary of Invention]

[Technical Problem]

For a non-aqueous electrolyte secondary battery, composite particles in each of which a silicon phase is dispersed in a matrix phase that is a lithium-ion conductive phase are used in some cases as the negative electrode active material. Such composite particles undergo cracking due to their volume change associated with absorption and desorption of lithium ions, and fresh surfaces are likely to appear. On a fresh surface, a high-resistance coating is formed by a side reaction with the electrolytic solution, so that the capacity is reduced. While fresh surfaces are formed in a large amount during break-in charging and discharging, aging, etc., they are also formed during charging and discharging. Accordingly, repeated charging and discharging causes a reduction in the capacity, thus reducing the cycle characteristics.

[Solution to Problem]

A first aspect of the present disclosure relates to a non-aqueous electrolyte secondary battery including:

a negative electrode including a negative electrode mixture;
a separator;
a positive electrode opposed to the negative electrode with the separator interposed between the negative electrode and the positive electrode; and
a non-aqueous electrolyte,
wherein the negative electrode mixture includes a negative electrode active material,
the negative electrode active material includes composite particles each including a matrix phase, and a silicon phase dispersed in the matrix phase, and

the non-aqueous electrolyte includes:

a heterocyclic compound represented by the following formula:

[Chem. 1]

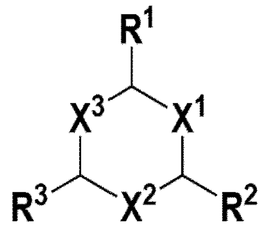

(I)

where $X^1$, $X^2$, and $X^3$ are each an oxygen element or a sulfur element, and $R^1$, $R^2$, and $R^3$ are each an alkyl group having 1 to 5 carbon atoms; and
a fluorine-containing cyclic carbonate.

[Advantageous Effects of Invention]

In a non-aqueous electrolyte secondary battery using a negative electrode including composite particles each including a silicon phase dispersed in a matrix phase, it is possible to reduce the initial negative electrode resistance, and also obtain excellent cycle characteristics.

[Brief Description of Drawing]

[FIG. 1] A a partially cut-away perspective view of a non-aqueous electrolyte secondary battery according to an embodiment of the present disclosure.

[Description of Embodiment]

While the novel features of the invention are set forth particularly in the appended claims, the invention, both as to organization and content, will be better understood and appreciated, along with other objects and features thereof, from the following detailed description taken in conjunction with the drawings.

In general, a carbonaceous material such as graphite is used as a negative electrode active material for a non-aqueous electrolyte secondary battery. When composite particles in each of which a silicon phase is dispersed in a matrix phase that is a lithium-ion conductive phase are used as the negative electrode active material, a capacity higher than that provided by using the carbonaceous material can be obtained theoretically. However, in such composite particles, the volume of the silicon phase significantly changes during absorption and desorption of lithium ions. Accordingly, not only the silicon phase, but also the matrix phase undergoes cracking, so that fresh surfaces are likely to appear. On a fresh surface, a side reaction with the non-aqueous electrolyte is likely to occur, which result in formation of a high-resistance coating. In particular, during an initial stage such as break-in charging and discharging, aging, and the initial charging and discharging, a large amount of fresh surfaces are considered to be formed due to significant cracking of the composite particles. Accordingly, the initial negative electrode resistance is likely to be increased significantly. Since fresh surfaces also formed during charging and discharging, repeated charging and discharging cause a reduction in the capacity retention rate, thus reducing the cycle characteristics. The cycle characteristics are significantly reduced, in particular, by repeatedly charging and discharging the battery in a high-temperature environment, or storing the battery in a high-temperature environment. In addition, significant side reactions involving the non-aqueous solvent occur in the fresh surfaces, resulting in an increase in the amount of gas generated.

In view of the foregoing, (1) a non-aqueous electrolyte secondary battery according to the present disclosure includes a negative electrode including a negative electrode mixture; a separator; a positive electrode opposed to the negative electrode with the separator interposed between the negative electrode and the positive electrode; and a non-aqueous electrolyte. The negative electrode mixture includes a negative electrode active material. The negative electrode active material includes composite particles each including a matrix phase, and a silicon phase dispersed in the matrix phase. The non-aqueous electrolyte includes: a heterocyclic compound represented by the following formula:

[Chem. 2]

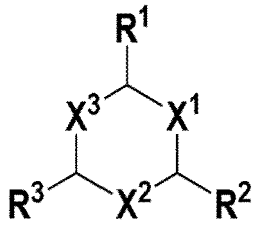

(I)

where $X^1$, $X^2$, and $X^3$ are each an oxygen element or a sulfur element, and $R^1$, $R^2$, and $R^3$ are each an alkyl group having 1 to 5 carbon atoms; and a fluorine-containing cyclic carbonate. Hereinafter, the heterocyclic compound represented by the above formula (I) may be referred to as a heterocyclic compound (I). The silicon phase in the composite particles may be referred to as a Si phase.

The use of the non-aqueous electrolyte including the heterocyclic compound (I) and the fluorine-containing cyclic carbonate suppresses an increase in the initial negative electrode resistance. This is presumably because, even if fresh surfaces are formed on the composite particles during the initial stage, low-resistance coatings are formed on the surfaces of the composite particles as a result of the aforementioned action between the heterocyclic compound and the fluorine-containing cyclic carbonate. In the case of using a non-aqueous electrolyte including 1,3,5-trioxane or 1,3,5-trithiane and the fluorine-containing cyclic carbonate, the effect of suppressing an increase in the initial negative electrode resistance is low. This is presumably because, in the case of using the heterocyclic compound (I), the presence of $R^1$ to $R^3$ prevents coatings formed on the surfaces of the composite particles from being excessively dense, as compared with the case of using 1,3,5-trioxane. When the non-aqueous electrolyte does not include the heterocyclic compound (I), and includes the fluorine-containing cyclic carbonate, coatings with relatively high resistance derived from the fluorine-containing cyclic carbonate are formed on the surfaces of the composite particles. When the non-aqueous electrolyte does not include the fluorine-containing cyclic carbonate, the effect of suppressing an increase in the initial negative electrode resistance is low even when the non-aqueous electrolyte includes the heterocyclic compound (I). Based on these facts, it is considered that when the non-aqueous electrolyte includes both the heterocyclic compound (I) and the fluorine-containing cyclic carbonate, low-resistance, high-quality coatings derived from the two components are formed on the surfaces of the composite particles. In addition, as a result of formation of such low-resistance coatings, side reactions involving the non-aqueous solvent are suppressed, and charge-discharge reactions are less likely to be impeded. Therefore, it is considered that even if fresh surfaces are formed on the composite particles due to repeated charging and discharging, the fresh surfaces are protected by low-resistance coatings, thus suppressing a reduction in the capacity. Accordingly, a high capacity retention rate can be obtained, making it possible to ensure excellent cycle characteristics. Moreover, the non-aqueous electrolyte secondary battery according to the present disclosure can secure a relatively capacity retention rate even after having been subjected to repeated charging and discharging in a high-temperature environment, or having been stored in a high-temperature environment, and, therefore, also has excellent high-temperature cycle characteristics. Furthermore, side reactions in a high-temperature environment can be suppressed, so that the amount of gas generated due to side reactions can be kept small.

Note that when only the carbonaceous material such as graphite is used as the negative electrode active material, the volume change associated with charging and discharging is small, so that fewer fresh surfaces are formed. Therefore, even when a non-aqueous electrolyte including the heterocyclic compound (I) and the fluorine-containing cyclic carbonate is used, the non-aqueous electrolyte has a little influence on the initial negative electrode resistance and the cycle characteristics, and thus has a low effect of improving the cycle characteristics. In the first place, in the case of using only the carbonaceous material as the negative electrode active material, higher cycle characteristics can be obtained when the fluorine-containing cyclic carbonate is used without using the heterocyclic compound (I), as compared with when the heterocyclic compound (I) and the fluorine-containing cyclic carbonate are used. In the case of using only the carbonaceous material as the negative electrode active material, the effect of reducing the amount of gas generated after exposure to a high temperature is also little even when the heterocyclic compound (I) is used.

(2) In (1) above, the concentration of the heterocyclic compound in the non-aqueous electrolyte may be 3 mass% or less.

(3) In (1) or (2) above, $R^1$, $R^2$, $R^3$ may be each an alkyl group having 1 to 4 carbon atoms (or an alkyl group having 1 to 3 carbon atoms).

(4) In any one of (1) to (3) above, the heterocyclic compound may be at least one selected from the group consisting of paraldehyde, trithioacetaldehyde, 2,4,6-triethyl-1,3,5-trioxane, 2,4,6-tripropyl-1,3,5-trioxane, and 2,4,6-tris(propane-2-yl)-1,3,5-trioxane.

(5) In any one of (1) to (4) above, the fluorine-containing cyclic carbonate may include a fluorinated ethylene

carbonate.

(6) In any one of (1) to (5) above, the non-aqueous electrolyte may include a cyclic carbonate having a carbon-carbon unsaturated bond.

(7) In any one of (1) to (6) above, the non-aqueous electrolyte may include lithium difluorophosphate.

(8) In any one of (1) to (7) above, the matrix phase may include at least one selected from the group consisting of a $SiO_2$ phase, a silicate phase, and a carbon phase.

(9) In any one of (1) to (8) above, the content of the composite particles in the negative electrode active material may be 1 mass% or more and 10 mass% or less.

(10) In any one of (1) to (9) above, the concentration of the fluorine-containing cyclic carbonate in the non-aqueous electrolyte may be 0.01 mass% or more.

In the following, each of the constituent elements of the non-aqueous electrolyte secondary battery according to the present disclosure, including (1) to (10) above, will be specifically described. At least one of (1) to (10) above may be combined with at least one of the elements described below as long as there are no technical discrepancies.

(Negative electrode)

The negative electrode includes a negative electrode mixtures. The negative electrode may include the negative electrode mixture and a negative electrode current collector retaining a negative electrode mixture. Usually, the negative electrode includes a negative electrode mixture in the form of a layer (hereinafter referred to as a negative electrode mixture layer). The negative electrode mixture includes at least a negative electrode active material. The negative electrode mixture may further include at least one selected from the group consisting of a binder and a thickener. The negative electrode mixture may further include a conductive agent, etc.

(Negative electrode mixture)

(Negative electrode active material)

The negative electrode active material includes at least composite particles in each of which a Si phase (fine Si phase) is dispersed in a matrix phase. The matrix phase includes a lithium-ion conductive phase.

Preferably, the lithium-ion conductive phase includes at least one selected from the group consisting of a $SiO_2$ phase, a silicate phase, and a carbon phase. The lithium-ion conductive phase can form an amorphous phase. However, the lithium-ion conductive phase is not limited thereto. For example, at least part of each of the silicate phase and the carbon phase may be a crystalline phase including crystalline carbon. Specific examples of the composite particles include composite particles each including a $SiO_2$ phase and a Si phase dispersed in the $SiO_2$ phase, composite particles (silicate composite particles) each including a silicate phase and a Si phase dispersed in the silicate phase, and composite particles (carbon composite particle) each including a carbon phase and a Si phase dispersed in the carbon phase. However, the composite particles are not limited to these specific examples.

The $SiO_2$ phase is an amorphous phase including 95 mass% or more of silicon dioxide. Composite particles in which the Si phase is dispersed in the $SiO_2$ phase is represented by $SiO_x$. x satisfies, for example, $0.5 \leq x < 2$, and may satisfy $0.8 \leq X \leq 1.6$. $SiO_x$ can be obtained by, for example, heat-treating silicon monoxide, to disproportionate the silicon monoxide into a $SiO_2$ phase and a fine Si phase. The observation of cross sections of the $SiO_x$ particles using a transmission electron microscope (TEM) can confirm the Si phase dispersed in the $SiO_2$ phase. As used herein, such composite particles may be referred to as a silicon oxide (Si oxide). When the negative electrode active material includes the Si oxide, a higher initial discharge capacity is likely to be secured.

Preferably, the silicate phase includes at least one of an alkali metal element (a Group 1 element other than hydrogen in the long-form periodic table) and a Group 2 element in the long-form periodic table. The alkali metal element includes lithium (Li), potassium (K), sodium (Na), and the like. The Group 2 elements includes magnesium (Mg), calcium (Ca), strontium (Sr), barium (Ba), and the like. The lithium silicate phase can have a composition represented by the formula: $Li_{2y}SiO_{2+y}$ where $0 < y < 2$. y may be 1/2, or 1. The silicate composite particles can be obtained by, for example, pulverizing a mixture of silicate and a silicon raw material in a ball mill or the like under stirring, to micronize the mixture, and thereafter heat-treating the mixture in an inert atmosphere.

The content of the Si phase dispersed in the silicate phase may be 30 mass% or more and 95 mass% or less, or 35 mass% or more and 75 mass% or less, relative to the total mass of the silicate composite particles.

Since the carbon phase is electronically conductive, the composite particles are less likely to be isolated even if they undergo cracking caused by expansion and contraction of the Si phase, so that the contact points between the composite particles and the surroundings are likely to be maintained. Accordingly, a reduction in the cycle characteristics is more likely to be suppressed.

The carbon phase can be constituted by, for example, shapeless carbon (i.e., amorphous carbon), or crystalline

carbon. The shapeless carbon may be, for example, hard carbon, soft carbon, or others. The shapeless carbon, in general, refers to a carbonaceous material having an average interplanar spacing d002 of the (002) plane of exceeding 0.340 nm, as measured by X-ray diffractometry. The crystalline carbon includes carbon having a graphite crystal structure such as graphite. The crystalline carbon such as graphite refers to a carbonaceous material having a d002 of 0.340 nm or less (e.g., 0.3354 nm or more and 0.340 nm or less).

The content of the Si phase in the carbon composite particle is, for example, 30 mass% or more and 80 mass% or less, and may be 40 mass% or more and 70 mass% or less. Such ranges are advantageous in that a high initial capacity can be obtained, and the effect of suppressing a reduction in the cycle characteristics is increased. When a relatively large amount of the carbon phase is included, even if the particles undergo cracking due to charging and discharging, the carbon phase is likely to enter the formed voids, so that the conductive path in the negative electrode mixture is likely to be maintained.

The carbon composite particles can be obtained by, for example, pulverizing a mixture of a carbon source and a silicon raw material in a ball mill or the like under stirring, to micronize the mixture, and thereafter heat-treating the mixture in an inert atmosphere. As the carbon source, it is possible to use, for example, petroleum resins such as coal pitch, petroleum pitch, and tar, saccharides such as carboxymethyl cellulose (CMC), polyvinyl pyrrolidone, cellulose, and sucrose, and water-soluble resins. When mixing the carbon source and the silicon raw material, the carbon source and the silicon raw material may be dispersed in a dispersing medium such as alcohol, for example. After drying the mixture that has been milled, the mixture is heated in an inert gas atmosphere at, for example, 600°C or more and 1000°C or less to carbonize the carbon source, thus forming a carbon phase.

The negative electrode active material may include one kind of, or a combination of two or more kinds of the composite particles.

The content of the composite particles in the negative electrode active material is, for example, 1 mass% or more, and may be 1.5 mass% or more or 2 mass% or more, or 3 mass% or more or 5 mass% or more. In this case, the influence of side reactions due to the volume change associated with absorption and desorption lithium ions is less likely to appear in the fresh surfaces. Accordingly, the effect provided by using the non-aqueous electrolyte including the heterocyclic compound (I) and the fluorine-containing cyclic carbonate is likely to be exhibited significantly. From the viewpoint of securing higher cycle characteristics, the content of the composite particles in the negative electrode active material is preferably 10 mass% or less, and may be 8 mass% or less or 5 mass% or less. These lower and upper limits can be freely combined. For example, the content of the composite particles in the negative electrode active material may be 1 mass% or more and 10 mass% or less (or 5 mass% or less), 1 mass% or more (or 2 mass% or more) and 8 mass% or less, 1.5 mass% or more and 10 mass% or less (or 5 mass% or less), or 2 mass% or more and 10 mass% or less (or 5 mass% or less). These ranges of lower limits or upper limits may be changed to the aforementioned values.

The composition of the composite particles can be determined by, for example, obtaining a backscattered electron image of a cross section of a negative electrode mixture layer using a field emission scanning electron microscope (FE-SEM), observing the composite particles, and performing elementary analysis for the observed composite particles. For example, a battery is disassembled to take out a negative electrode, which is then washed with a non-aqueous solvent such as ethylene carbonate, and dried, and thereafter the negative electrode mixture layer is subjected to cross-sectional machining using a cross section polisher (CP), to obtain a sample. FE-SEM is used to capture a backscattered electron image of the sample cross section. For elementary analysis, an electron probe micro analyzer (EPMA) or the like can be used, for example. An auger electron spectroscopy (AES) analyzer may be used to perform elementary qualitative and quantitative analysis. The composition of the lithium-ion conductive phase can also be determined by the above-described analysis. The composition of the carbon phase can be confirmed based on the d002 determined by X-ray diffractometry.

The average particle diameter (D50) of the composite particles is, for example, 1 $\mu$m or more and 25 $\mu$m or less, and may be 4 $\mu$m or more and 15 $\mu$m or less. The above-described ranges are likely to provide a favorable battery performance.

Note that as used herein, the average particle diameter (D50) means a particle diameter (volume average particle diameter) with which an accumulated volume value is 50% in a particle size distribution measured by a laser diffraction/scattering method. As the measurement apparatus, a "LA-750" manufactured by HORIBA, Ltd. (HORIBA) can be used, for example. The average particle diameter of the composite particles may be obtained from a cross-section sample, which is formed for obtaining a backscattered electron image of the FE-SEM, of the negative electrode. The circle-equivalent diameters of cross sections of 10 or more composite particles are obtained, and their average value is determined as an average particle diameter. Here, a circle-equivalent diameter refers to a diameter of a circle having the same area as the area of each particle observed on a cross section of the negative electrode.

Usually, the Si phase dispersed in the matrix phase is constituted by a plurality of crystallites. The crystallite size of the Si phase is, for example, 500 nm or less, and may be 30 nm or less. The lower limit of the crystallite size of the Si phase is not particularly limited, and is, for example, 5 nm or more. The crystallite size is calculated from the half-width of a diffraction peak attributed to the Si (111) plane in the X-ray diffraction (XRD) pattern of the Si phase, using the Scherrer equation.

The content of the Si phase in the composite particle can be measured by Si-NMR, for example. In the following, desirable measurement conditions for Si-NMR will be described.

Measurement apparatus: a solid-state nuclear magnetic resonance spectrometer (INOVA-400), manufactured by Varian Inc.

Probe: Varian 7 mm CPMAS-2
MAS: 4.2 kHz
MAS rate: 4 kHz
Pulse: DD (45° pulse + signal acquisition time 1H decoupling)
Repetition time: 1200 sec
Observation width: 100 kHz
Center of observation: approximately -100 ppm
Signal acquisition time: 0.05 sec
Number of times of integrations: 560
Sample amount: 207.6 mg

From the viewpoint of enhancing the conductivity, at least part of the surface of each of the composite particles may be coated with a conductive layer. The conductive layer includes a conductive material such as conductive carbon. The coating amount of the conductive layer is, for example, 1 part by mass or more and 10 parts by mass or less per 100 parts by mass of the total of the composite particle and the conductive layer. Composite particles each having a conductive layer on the surface thereof can be obtained by, for example, mixing coal pitch or the like with the composite particles, and heat-treating the mixture in an inert atmosphere.

(Other negative electrode active materials)

Examples of the negative electrode active materials other than the composite particles include at least one selected from the group consisting of carbonaceous materials that do not include a Si phase, a Si simple substance, Si alloys, Si compounds other than Si oxides, a Sn simple substance, Sn alloys, and Sn compounds (Sn oxides, etc.). The composite particles undergo volume expansion and contraction associated with charging and discharging, and, therefore, when the ratio thereof in the negative electrode active material increases, a contact failure between the negative electrode active material and the negative electrode current collector is likely to occur due to charging and discharging. The degree of expansion and contraction during charging and discharging of the carbonaceous material is smaller than that of the composite particles. By using the composite particles and the carbonaceous material in combination, it is possible to maintain a more favorable state of contact between the negative electrode active material particles, and between the negative electrode mixture and the negative electrode current collector when charging and discharging are repeated. Accordingly, by using the composite particles and the carbonaceous material that does not include a Si phase in combination, excellent cycle characteristics (also including high-temperature cycle characteristics) are likely to be obtained while the negative electrode is provided with the high capacity of the Si phase included in the composite particles. By using a non-aqueous electrolyte including the heterocyclic compound (I) and the fluorine-containing cyclic carbonate, the impediment to charge-discharge reactions is suppressed, thus allowing the high capacity of the Si phase to be sufficiently drawn.

Examples of the carbonaceous material include graphite, graphitizable carbon (soft carbon), and non-graphitizable carbon (hard carbon). The carbonaceous materials may be used alone or in combination of two or more thereof.

In particular, graphite is preferred as the carbonaceous material because of exhibiting excellent stability during charging and discharging and also having a small irreversible capacity. Examples of the graphite include natural graphite, artificial graphite, and graphitized mesophase carbon particles. The graphite particle may partially include amorphous carbon, graphitizable carbon, and non-graphitizable carbon.

Graphite refers to a carbonaceous material having a developed graphite crystal structure. The average interplanar spacing d002 of the (002) plane of the graphite as measured by X-ray diffractometry may be, for example, 0.340 nm or less, or 0.3354 nm or more and 0.340 nm or less. The crystallite size Lc (002) of the graphite may be, for example, 5 nm or more, or 5 nm or more and 200 nm or less. The crystallite size Lc (002) can be measured by the Scherrer method, for example. When the interplanar spacing d002 of the (002) plane and the crystallite size Lc (002) of the graphite are within the above-described ranges, a high capacity is likely to be obtained.

The ratio of the total amount of the composite particles and the carbonaceous material (the carbonaceous material that does not include a Si phase) in the negative electrode active material is preferably 90 mass% or more, and may be 95 mass% or more, or 98 mass% or more. The ratio of the total amount of the composite particles and the carbonaceous material in the negative electrode active material is 100 mass% or less. The negative electrode active material may be constituted by only the composite particles and the carbonaceous material.

(Binder)

As the binder, a resin material is used, for example. Examples of the binder include fluorocarbon resins (e.g., polytetrafluoroethylene, polyvinylidene fluoride), polyolefin resins (e.g., polyethylene, polypropylene), polyamide resins (e.g., aramid resins), polyimide resins (e.g., polyimide, polyamide imide), acrylic resins (e.g., polyacrylic acid, polymethacrylic acid, acrylic acid-methacrylic acid copolymers, ethylene-acrylic acid copolymers, or salts thereof), vinyl resins (e.g., polyvinyl acetate), and rubber-like materials (e.g., styrene-butadiene copolymer rubber (SBR)). The binders may be used alone or in combination of two or more thereof.

(Thickener)

Examples of the thickener include cellulose derivatives such as cellulose ether. The cellulose derivatives include CMC and modified forms thereof, methylcellulose, etc. The modified forms of CMC also include salts of CMC. The salts include alkali metal salts (e.g., a sodium salt), ammonium salts, etc. The thickeners may be used alone or in combination of two or more thereof.

(Conductive agent)

Examples of the conductive agent include conductive fibers and conductive particles. Examples of the conductive fibers include carbon fibers, metal fibers, etc. The carbon fibers also include carbon nanotubes (CNTs). Examples of the conductive particles include conductive carbon (carbon black, etc.) metal powder, etc. The conductive agents may be used alone or in combination of two or more thereof.

The composite particles undergo a significant volume change associated with expansion and contraction during charging and discharging. When the negative electrode mixture include CNTs, even if the composite particles undergo cracking associated with expansion and contraction of the particles, the disconnection of the conductive path is suppressed by the CNTs, so that higher cycle characteristics are likely to be obtained. In particular, when the content of the composite particles in the negative electrode active material is large (e.g., 4 mass% or more), the effect achieved by the CNTs is significantly exhibited.

A CNT is a carbonaceous material having a nanosized diameter, and has a structure in which a sheet (graphene) of a six-membered ring network formed by carbon atoms is rolled up to form a tubular shape. CNTs have excellent conductivity. When the number of graphene walls constituting the tubular structure of a CNT is one, the CNT is referred to as a single-walled carbon nanotube (SWCNT). When the number of the above-described walls is two or more, the CNT is referred to as a multi-walled carbon nanotube (MWCNT).

Preferably, the CNTs include SWCNTs. In this case, higher cycle characteristics are likely to be secured.

The proportion of the SWCNTs in the CNTs is, for example, 50% or more, and may be 75% or more, or 90% or more. The proportion of the SWCNTs in the CNTs is 100% or less. Note that the proportion of the SWCNTs in the CNTs is the ratio of the number of SWCNTs to the total number of the CNTs.

The inclusion of the CNTs in the negative electrode mixture can be confirmed, for example, from a scanning electron microscope (SEM) image of a cross section of the negative electrode mixture layer.

The proportion of the SWCNTs in the CNTs included in the negative electrode mixture is determined by the following method.

An image of a cross section of the negative electrode mixture layer or an image of the CNTs is obtained using a SEM. In the SEM image, a plurality of (e.g., 50 to 200) CNTs are arbitrarily selected and then observed to determine the number of SWCNTs. Then, the proportion of the number of SWCNTs to the total number of the selected CNTs is calculated.

The quantitative analysis of the CNTs is performed by, for example, combination of Raman spectrometry and thermogravimetric analysis.

From the viewpoint of suppressing the disconnection of the conductive path during charging and discharging, the average diameter of the CNTs is, for example, 1 nm or more and 10 nm or less, and may be 1 nm or more and 5 nm or less.

From the viewpoint of reducing the disconnection of the conductive path during charging and discharging, the average length of the CNTs is, for example, 1 μm or more and 100 μm or less, and may be 5 μm or more and 20 μm or less.

The average length and the average diameter of the CNTs can be determined from an image of a cross section of the negative electrode mixture layer or an image of the CNTs, using at least one of a SEM of a TEM. More specifically, in a captured image, a plurality of (e.g., 50 to 200) CNTs are arbitrarily selected to measure the lengths and the diameters, which are then averaged to determine the average length and the average diameter. Note that the length of a CNT means the length when the CNT is stretched into a straight line.

The content of the CNTs in the negative electrode mixture is, for example, 0.005 mass% or more and 1 mass% or less, and may be 0.01 mass% or more and 1 mass% or less, or 0.01 mass% or more and 0.05 mass% or less. When the content of the CNTs in the negative electrode mixture is within such ranges, the degree of enhancement of the conductivity

of the negative electrode, and the effect of improving the capacity retention rate during the initial stage of charge-discharge cycles are increased.

(Negative electrode current collector)

The negative electrode current collector is selected according to the type of the non-aqueous electrolyte secondary battery. Examples of the negative electrode current collector include a sheet-shaped current collector. As the current collector, a metal foil or the like may be used. A porous current collector may be used as the current collector. Examples of the porous current collector include a net-like material, a punched sheet, and expanded metal.

Examples of the material of the negative electrode current collector include stainless steel, nickel, nickel alloys, copper, and copper alloys.

The thickness of the negative electrode current collector is not particularly limited, and is, for example, 1 to 50 $\mu$m, and may be 5 to 30 $\mu$m.

(Others)

The negative electrode can be formed by, for example, applying, to the surface of the negative electrode current collector, a negative electrode slurry in which the components of the negative electrode mixture are dispersed in a dispersing medium, and drying the slurry. The coated film obtained after drying may be rolled, as necessary.

Examples of the dispersing medium include, but are not particularly limited to, water, alcohols (e.g., ethanol), ethers (e.g., tetrahydrofuran), amides (e.g., dimethylformamide), N-methyl-2-pyrrolidone (NMP), or solvent mixtures thereof.

(Positive electrode)

The positive electrode may include a positive electrode current collector, and a positive electrode mixture layer held on the surface of the positive electrode current collector. The positive electrode mixture layer can be formed by applying, to the surface of the positive electrode current collector, a positive electrode slurry in which the positive electrode mixture is dispersed in a dispersing medium, and drying the slurry. The coated film obtained after drying may be rolled, as necessary. The positive electrode mixture includes a positive electrode active material as an essential component, and may include a binder, a conductive agent, and the like as optional components. The dispersing medium can be selected from, for example, the dispersing mediums given as the examples for the negative electrode.

As the positive electrode active material, for example, a composite oxide including lithium and a transition metal can be used. Examples of the transition metal include Ni, Co, and Mn. Examples of the composite oxide including lithium and a transition metal include $Li_aCoO_2$, $Li_aNiO_2$, $Li_aMnO_2$, $Li_aCo_{b1}Ni_{1-b1}O_2$, $Li_aCO_{b1}M_{1-b1}O_{c1}$, $Li_aNi_{1-b1}M_{b1}O_{c1}$, $Li_aMn_2O_4$, and $Li_aMn_{2-b1}M_{b1}O_4$. Here, a = 0 to 1.2, b1 = 0 to 0.9, and c1 = 2.0 to 2.3. M is at least one selected from the group consisting of Na, Mg, Sc, Y, Mn, Fe, Co, Ni, Cu, Zn, Al, Cr, Pb, Sb, and B. Note that the value a, which represents the molar ratio of lithium, increases or decreases through charge-discharge.

Preferred among them is a lithium-nickel composite oxide represented by $Li_aNi_{b2}M_{1-b2}O_2$ where $0 < a \leq 1.2$, $0.3 \leq b2 \leq 1$, and M is at least one selected from the group consisting of Mn, Co, and Al. From the viewpoint of increasing the capacity, it is more preferable to satisfy $0.8 \leq b2 \leq 1$ or $0.85 \leq b2 \leq 1$. In terms of the stability of the crystal structure, further preferred is $Li_aNi_{b2}Co_{c2}Al_dO_2$ where $0 < a \leq 1.2$, $0.8 \leq b2 < 1$, $0 < c2 < 0.2$ (or $0 < c2 \leq 0.18$), $0 < d \leq 0.1$, and $b2 + c2 + d = 1$.

As the binder, it is possible to use the resin materials given as the examples for the negative electrode. The conductive agents can be selected from, for example, the conductive agents given as the examples for the negative electrode. Graphite may be used as the conductive agent.

The shape and the thickness of the positive electrode current collector can be respectively selected from the shapes and the ranges described in relation to the negative electrode current collector. Examples of the material of the positive electrode current collector include stainless steel, aluminum, aluminum alloys, and titanium.

(Separator)

Usually, it is desirable that a separator be interposed between the positive electrode and the negative electrode. The separator has a high ion permeability, as well as appropriate mechanical strength and insulating properties. Examples of the separator include a microporous thin film, a woven fabric, and a non-woven fabric. The separator may have a monolayer structure, or a multilayer structure. The separator having a multilayer structure may be a laminate including, as layers, at least two selected from the group consisting of a microporous thin film, a woven fabric, and a non-woven fabric. As the material of the separator, polyolefins (e.g., polypropylene, polyethylene) are preferred.

(Non-aqueous electrolyte)

The non-aqueous electrolyte is usually used in the form of a liquid, but may be in a state in which its fluidity is limited by a gelling agent or the like. The non-aqueous electrolyte usually includes a non-aqueous solvent, and a lithium salt dissolved in the non-aqueous solvent, and includes an additive in addition thereto. In the present disclosure, the non-aqueous electrolyte includes the heterocyclic compound (I) and the fluorine-containing cyclic carbonate. The non-aqueous electrolyte may further include an additive other than the heterocyclic compound (I). The fluorine-containing cyclic carbonate may be included either as the non-aqueous solvent or the additive in the non-aqueous electrolyte.

(Non-aqueous solvent)

Examples of the non-aqueous solvent include cyclic carbonic acid esters, chain carbonic acid esters, cyclic carboxylic acid esters, and chain carboxylic acid esters. The cyclic carbonic acid esters include propylene carbonate (PC), ethylene carbonate (EC), fluoroethylene carbonate (FEC), and vinylene carbonate (VC). The chain carbonic acid esters include diethyl carbonate (DEC), ethyl methyl carbonate (EMC), dimethyl carbonate (DMC), etc. The cyclic carboxylic acid esters include γ-butyrolactone (GBL), γ-valerolactone (GVL), etc. The chain carboxylic acid esters include methyl formate, ethyl formate, propyl formate, methyl acetate (MA), ethyl acetate, propyl acetate, methyl propionate, ethyl propionate, propyl propionate, etc. The non-aqueous electrolyte may include one kind of, or a combination of two or more kinds of the non-aqueous solvents. For example, it is possible to combine a cyclic carbonic acid ester with another non-aqueous solvent (e.g., a chain carbonic acid ester).

(Lithium salt)

Examples of the lithium salt include $LiClO_4$, $LiBF_4$, $LiPF_6$, $LiAlCl_4$, $LiSbF_6$, LiSCN, $LiCF_3SO_3$, $LiCF_3CO_2$, $LiAsF_6$, $LiB_{10}Cl_{10}$, lithium lower aliphatic carboxylate, LiCl, LiBr, LiI, phosphates, borates, and imide salts. The phosphates include lithium difluorophosphate ($LiPO_2F_2$), lithium difluoro bis(oxalato)phosphate (LiDFBOP), lithium tetrafluoro(oxalato)phosphate, etc. The borates include lithium bis(oxalato)borate (LiBOB), lithium difluoro(oxalato)borate (LiDFOB), etc. The imide salts include lithium bisfluorosulfonylimide ($LiN(FSO_2)_2$), lithium bis(trifluoromethanesulfonyl)imide ($LiN(CF_3SO_2)_2$), lithium trifluoromethanesulfonyl nonafluorobutanesulfonyl imide ($LiN(CF_3SO_2)(C_4F_9SO_2)$), lithium bis(pentafluoroethanesulfonyl)imide ($LiN(C_2F_5SO_2)_2$), etc. The non-aqueous electrolyte may include one of, or a combination of two or more of the lithium salts.

The concentration of the lithium salt in the electrolytic solution is, for example, 0.5 mol/L or more and 2 mol/L or less.

(Heterocyclic compound (I))

In the heterocyclic compound (I), at least two of $X^1$ to $X^3$ may be the same, or all of $X^1$ to $X^3$ may be different. The following compound (IA) in which all of $X^1$ to $X^3$ are oxygen elements, or the following compound (IB) in which all of $X^1$ to $X^3$ are sulfur elements is relatively easily produced and relatively easily available.

[Chem. 3]

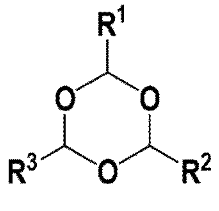

(IA)

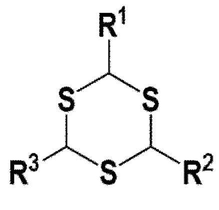

(IB)

Of these, the compound (IA) in which all of $X^1$ to $X^3$ are oxygen elements is advantageous in that the compound (IA), together with the fluorine-containing cyclic carbonate, is likely to form a low-resistance, high-quality coating on the surface of each of the composite particles, so that the initial negative electrode resistance can be suppressed low.

Examples of the alkyl group represented by $R^1$ to $R^3$ in the formulae (I), (IA), and (IB) include a methyl group, an ethyl group, an n-propyl group, an isopropyl group, an n-butyl group, a sec-butyl group, an i-butyl group, a tert-butyl group, an n-pentyl group, an isopentyl group, a sec-pentyl group, a neopentyl group, a 1-methylbutyl group, a 2-methylbutyl

group, a 1,1-dimethylpropyl group, and a 1,2-dimethylpropyl group. From the viewpoint of an improved effect of achieving higher enhancing cycle characteristics, the number of carbon atoms in the alkyl group may be 1 or more and 4 or less, or 1 or more and 3 or less. Among the alkyl groups, a methyl group, an ethyl group, an n-propyl group, or an isopropyl group is preferred. The alkyl group may be a methyl group or an ethyl group. In the formulae, at least two of $R^1$ to $R^3$ may be the same, or all of $R^1$ to $R^3$ may be different. Compound in which all of $R^1$ to $R^3$ are the same in the formulae are relatively easily produced and relatively easily available.

The non-aqueous electrolyte may include one of, or a combination of two or more of the heterocyclic compounds (I).

The concentration of the heterocyclic compound (I) in the non-aqueous electrolyte in a non-aqueous electrolyte secondary battery is, for example, 3 mass% or less, or may be 2 mass% or less. This concentration of the heterocyclic compound (I) is a value determined for a non-aqueous electrolyte collected from a non-aqueous electrolyte secondary battery in the initial state. In a non-aqueous electrolyte secondary battery, the heterocyclic compound (I) is used for the formation of coatings, and, therefore, the concentration of the heterocyclic compound (I) in the non-aqueous electrolyte changes during a storage period or a period of charge-discharge cycles. Accordingly, the heterocyclic compound (I) may remain at a concentration greater than or equal to the detection limit in the non-aqueous electrolyte collected from the non-aqueous electrolyte secondary battery in the initial state. The content of the heterocyclic compound (I) in the non-aqueous electrolyte may be 0.01 mass% or more, 0.1 mass% or more, or 0.5 mass% or more.

The non-aqueous electrolyte secondary battery in the initial state is, for example, a non-aqueous electrolyte secondary battery that has been assembled and subjected to break-in charging and discharging (and aging as necessary). A commercially available non-aqueous electrolyte secondary battery may be used as the non-aqueous electrolyte secondary battery in the initial state, and the non-aqueous electrolyte may be collected therefrom for analysis.

The concentration of the heterocyclic compound (I) in a non-aqueous electrolyte used for the production of the non-aqueous electrolyte secondary battery may be 0.01 mass% or more, 0.1 mass% or more, 0.5 mass% or more, or 1 mass% or more. The content of the heterocyclic compound (I) in an electrolytic solution used for the production of the non-aqueous electrolyte secondary battery is, for example, 3 mass% or less, and may be 2 mass% or less. These lower and upper limits can be combined in any combination. The concentration of the heterocyclic compound (I) may be, for example, 0.01 mass% or more and 3 mass% or less, or 0.5 mass% or more (or 1 mass% or more) and 3 mass% or less.

(Fluorine-containing cyclic carbonate)

A fluorine-containing cyclic carbonate means a compound in which at least one of the hydrogen atoms of a cyclic carbonate is substituted by a fluorine atom. By combining the heterocyclic compound (I) and the fluorine-containing cyclic carbonate, low-resistance, high-quality coatings are formed on the negative electrode active material surface, in spite of using the negative electrode including the composite particle including a Si phase. This makes it possible to reduce the initial negative electrode resistance, and secure high cycle characteristics.

The fluorine-containing cyclic carbonate includes, for example, a compound represented by the following formula (II):

[Chem. 4]

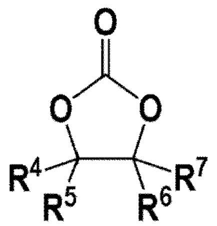

(II)

where $R^4$ to $R^7$ are each independently a hydrogen atom or a methyl group, at least one of the hydrogen atom and the hydrogen atoms of the methyl group is substituted by a fluorine atom. The remaining hydrogen atoms not substituted by fluorine atoms may be substituted by halogen atoms (e.g., a chlorine atom, a bromine atom) other than a fluorine atom).

Specific examples of the fluorine-containing cyclic carbonate include fluorinated ethylene carbonate (e.g., FEC, 1,2-difluoroethylene carbonate, 1,1-difluoroethylene carbonate), 1-fluoropropylene carbonate, 3,3,3-trifluoropropylene carbonate, and 2,3-difluoro-2,3-butylene carbonate. Among these, FEC is preferred in terms of high effect of enhancing the cycle characteristics. The fluorine-containing cyclic carbonates may be used alone or in combination of two or more thereof.

The fluorine-containing cyclic carbonate may be included at a relatively high concentration (e.g., more than 2

mass%) as the non-aqueous solvent in the non-aqueous electrolyte, and the concentration may be 3 mass% or less, for example. In view of that the resistance of the coatings is likely to be suppressed, it is preferable that the fluorine-containing cyclic carbonate is included in a small amount (e.g., at a concentration of 2 mass% or less) as an additive in the non-aqueous electrolyte. Note that this concentration is a value determined for a non-aqueous electrolyte collected from a non-aqueous electrolyte secondary battery in the initial state. In a non-aqueous electrolyte secondary battery, the fluorine-containing cyclic carbonate is used for the formation of coatings, and, therefore, the concentration of the fluorine-containing cyclic carbonate in the non-aqueous electrolyte changes during a storage period or a period of charge-discharge cycles. Accordingly, the fluorine-containing cyclic carbonate may remain at a concentration greater than or equal to the detection limit in the non-aqueous electrolyte collected from the non-aqueous electrolyte secondary battery in the initial state. The concentration of the fluorine-containing cyclic carbonate in the non-aqueous electrolyte may be 0.01 mass% or more, 0.1 mass% or more, or 0.5 mass% or more. These lower and upper limits can be freely combined.

The concentration of the fluorine-containing cyclic carbonate in the non-aqueous electrolyte used for the production of the non-aqueous electrolyte secondary battery may be 0.01 mass% or more, 0.1 mass% or more, or 0.5 mass% or more. The content of the fluorine-containing cyclic carbonate in the electrolytic solution used for the production of the non-aqueous electrolyte secondary battery may be, for example, 3 mass% or less, and may be 2 mass% or less. These lower and upper limits can be combined in any combination.

In the case of using the fluorine-containing cyclic carbonate as an additive, it is preferable to use a non-aqueous solvent other than the fluorine-containing cyclic carbonate as the non-aqueous solvent.

(Other additives)

Phosphates (lithium difluorophosphate ($LiPO_2F_2$) etc.), cyclic carbonates (VC, vinyl ethylene carbonate (VEC), etc.) having a carbon-carbon unsaturated bond, aromatic compounds (cyclohexylbenzene, etc.), sulfur element-containing compounds, and so forth may be included as additives other than the heterocyclic compound (I) and the fluorine-containing cyclic carbonate. The sulfur element-containing compounds (S-containing compound) include at least one selected from the group consisting of sulfate esters, sulfite esters, and sulfonate esters (propane sultone, propene sultone, etc.). These esters may be either cyclic esters or chain esters. The S-containing compounds encompass salts of these esters. The non-aqueous electrolyte may include one of, or a combination of two or more of these additives.

When the non-aqueous electrolyte includes a cyclic carbonate having a carbon-carbon unsaturated bond, a solid electrolyte interface (SEI) is formed on the surface of the negative electrode active material, thus protecting the negative electrode, and suppressing side reactions with the electrolyte. Presumably, the formed SEI has high coating flexibility, and is likely to accommodate itself to expansion and contraction of the negative electrode due to charging and discharging. Accordingly, even after repeated charging and discharging, it is possible to suppress a reduction in the capacity, thus achieving even higher cycle characteristics. In the non-aqueous electrolyte secondary battery in the initial state, the concentration of such a cyclic carbonate in the non-aqueous electrolyte may be 5 mass% or less, 4 mass% or less, or 2 mass% or less. The concentration of such a cyclic carbonate in the non-aqueous electrolyte is greater than or equal to the detection limit, and may be 0.01 mass% or more. In the case of using the cyclic carbonate having a carbon-carbon unsaturated bond as an additive, it is preferable to use, as the non-aqueous solvent, a non-aqueous solvent other than the cyclic carbonate having a carbon-carbon unsaturated bond.

When the non-aqueous electrolyte includes a phosphate such as lithium difluorophosphate, a coating protecting the surface of the positive electrode is formed, as a result of which the deterioration of the positive electrode can be suppressed, and an increase in the resistance of the positive electrode can be suppressed. Accordingly, even higher cycle characteristics can be obtained. In the non-aqueous electrolyte secondary battery in the initial state, the concentration of the phosphate in the non-aqueous electrolyte is preferably 2 mass% or less. In the non-aqueous electrolyte secondary battery in the initial state, the concentration of the phosphate in the non-aqueous electrolyte is greater than or equal to the detection limit, and may be 0.01 mass% or more. In the case of using the phosphate as an additive, it is preferable to use, as the lithium salt, a lithium salt (in particular, lithium difluorophosphate) other than the phosphate.

(Others)

Examples of the structure of the non-aqueous electrolyte secondary battery include a structure in which an electrode group formed by winding a positive electrode and a negative electrode with a separator interposed therebetween is housed in an exterior member together with a non-aqueous electrolyte. However, the structure of the non-aqueous electrolyte secondary battery is not limited to such a structure. For example, the electrode group may be a stacked electrode group formed by stacking a positive electrode and a negative electrode with a separator interposed therebetween. The configuration of the non-aqueous electrolyte secondary battery is not also limited, and the non-aqueous electrolyte secondary battery may have, for example, a cylindrical configuration, a prismatic configuration, a coin configuration, a button configuration, and a laminated configuration.

FIG. 1 is a partially cut-away schematic perspective view of a prismatic non-aqueous electrolyte secondary battery according to an embodiment of the present disclosure. The non-aqueous electrolyte secondary battery includes a bottomed prismatic battery case 4, and an electrode group 1 and an electrolytic solution (not shown) that are housed in the battery case 4. The electrode group 1 includes a long strip-shaped negative electrode, a long strip-shaped positive electrode, and a separator interposed therebetween. A negative electrode current collector of the negative electrode is electrically connected, via a negative electrode lead 3, to a negative electrode terminal 6 provided on a sealing plate 5. The negative electrode terminal 6 is insulated from the sealing plate 5 by a resin gasket 7. A positive electrode current collector of the positive electrode is electrically connected, via a positive electrode lead 2, to a back surface of the sealing plate 5. That is, the positive electrode is electrically connected to the battery case 4 also serving as a positive electrode terminal. The peripheral edge of the sealing plate 5 is fitted to an opening end of the battery case 4, and the fitted portion is laser-welded. The sealing plate 5 has an injection hole for the electrolytic solution, and is closed by a sealing plug 8 after injection of the electrolytic solution.

[Examples]

Hereinafter, the present invention will be more specifically described by way of examples and comparative examples. However, the present invention is not limited to the following examples.

<<Examples 1 to 11, Comparative Examples 1 to 7, and Reference Examples 1 to 2>>

According to the following procedure, non-aqueous electrolyte secondary batteries were produced and evaluated.

(1) Production of negative electrode

A proper amount of water was added to a negative electrode mixture, and mixed to obtain a negative electrode slurry. As the negative electrode mixture, a mixture of a negative electrode active material, a binder, and a conductive agent was used.

As the negative electrode active material, composite particles described in (a) below and graphite particles described in (b) below were used in the mass ratios shown in the tables, as necessary. Note that the mass ratio of each of the negative electrode active materials was a ratio calculated excluding the mass of the conductive layer.

(a) Composite particles: silicate composite particles ($Li_{2y}SiO_{2+y}$ particles with surfaces coated with a conductive layer including conductive carbon, y = 0.5, an average particle diameter (D50) 10 μm).
(b) Graphite particles: average particle diameter (D50) 25 μm

As the binder, sodium polyacrylate (PAA-Na), a sodium salt of CMC (CMC-Na), and SBR were used. As the conductive agent, CNTs (average diameter about 1.6 nm, average length 5 about μm) including 90% or more of SWCNTs were used.

The content of the CNTs in the negative electrode mixture (dry solid) was 0.02 mass%. Each of the contents of PAA-Na, CMC-Na, and SBR, as dry solids, in the negative electrode mixture was 1 mass%.

Next, the negative electrode slurry was applied onto copper foil, and the coated film was dried, and thereafter rolled to form a negative electrode mixture layer (thickness 80 μm, density 1.6 g/cm$^3$) on both sides of the copper foil, thus obtaining a negative electrode.

(2) Production of positive electrode

To 95 parts by mass of a lithium-containing composite oxide ($LiNi_{0.8}Co_{0.18}Al_{0.02}O_2$), 2.5 parts by mass of acetylene black, 2.5 parts by mass of polyvinylidene fluoride, and a proper amount of NMP were added, and mixed, to obtain a positive electrode slurry. Next, the positive electrode slurry was applied onto aluminum foil. The coated film was dried, and thereafter rolled to form a positive electrode mixture layer (thickness 95 μm, density 3.6 g/cm$^3$) on both sides of the aluminum foil, thus obtaining a positive electrode.

(3) Preparation of non-aqueous electrolyte

$LiPF_6$, $LiPO_2F_2$, and, as necessary, the heterocyclic compounds shown in the tables were dissolved in a solvent mixture of EC and EMC (EC:EMC = 30:70 (volume ratio)), and FEC and VC were mixed as necessary, to prepare a non-aqueous electrolyte. The concentration of $LiPF_6$ in the non-aqueous electrolyte was 1 mol/L, and the concentration of

$LiPO_2F_2$ was 1 mass%. The concentrations (concentrations during preparation of the non-aqueous electrolyte) of the heterocyclic compound and FEC in the non-aqueous electrolyte had the values (mass%) shown in the tables. The concentration (concentration during preparation of the non-aqueous electrolyte) of VC in the non-aqueous electrolyte was 2 mass%.

Note that PAD in the tables is paraldehyde represented by the following formula (Ia-1). TAD is trithioacetaldehyde represented by the following formula (Ib). TET is 2,4,6-triethyl-1,3,5-trioxane represented by the formula (Ia-2). TPYT is 2,4,6-tripropyl-1,3,5-trioxane represented by the formula (Ia-3). TPAT is a 2,4,6-tris(propane-2-yl)-1,3,5-trioxane represented by the formula (Ia-4).

[Chem. 5]

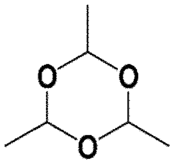

(Ia-1)

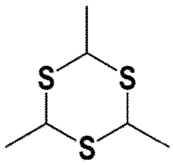

(Ib)

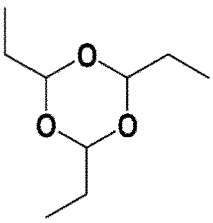

(Ia-2)

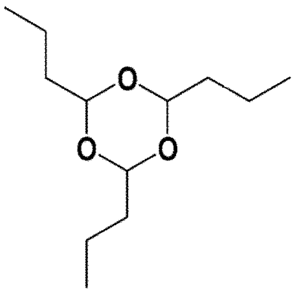

(Ia-3)

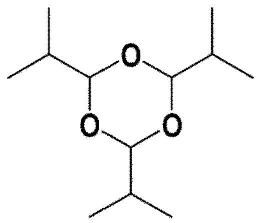

(Ia-4)

(4) Production of non-aqueous electrolyte secondary battery

A positive electrode lead mad of Al was attached to each of the positive electrodes obtained as described above, and a negative electrode made of Ni was attached to each of the negative electrode leads obtained as above. In an inert gas atmosphere, the positive electrode and the negative electrode were spirally wound with a thin polyethylene film (separator) interposed therebetween, to produce a wound electrode group. The electrode group was housed in an exterior member in the form of a bag formed of a laminate sheet including an Al layer. After injecting a predetermined amount of the above-described electrolytic solution into the exterior member, the exterior member was sealed to produce a non-aqueous electrolyte secondary battery. Note that when housing the electrode group in the exterior member, each of the positive electrode lead and the negative electrode lead was partly exposed to the outside from the exterior member.

<<Evaluations>>

The following evaluations were performed using the obtained non-aqueous electrolyte secondary batteries.

(a) Initial negative electrode resistance value

The reaction resistance of each of the negative electrodes was measured by alternating-current impedance measurement (frequency: 100 mHz to 1 MHz, amplitude: 10 mV). First, each battery was charged at 25°C at a constant current corresponding to 0.2C to an SOC of 50% (50% of full charge), and thereafter the impedance measurement was performed. The Cole-Cole plot obtained from the measurement result was analyzed to determine the reaction resistance of the negative electrode as an initial negative electrode resistance value. As for Tables 1 and 2, the initial negative electrode resistance value of each of the examples was evaluated based on an increase rate (%) from the initial negative electrode resistance value of Reference Example 1. An increase rate (%) having a negative value corresponds to a decrease rate from the initial resistance value of Reference Example 1 or 2. In Table 3, the increase rates of Examples 10,

11, and 1 each correspond to a decrease rate from the initial resistance value of Reference Example 1, and the increase rates of Comparative Examples 6 and 7 each correspond to a decrease rate from the initial resistance value of Reference Example 2.

(b) Cycle characteristics

In an environment at 25°C, each battery was subjected to constant-current charging at a constant current of 0.5 It until the voltage reached 4.2 V, followed by constant-voltage charging at a constant voltage of 4.2 V until the current reached 0.02 It. Subsequently, the battery was subjected to constant-current discharging at a constant current of 0.5 It until the voltage reached 3.0 V With this charging and discharging assumed as one cycle, 1000 cycles were repeated. The discharge capacity at the 1st cycle and the discharge capacities at the 70th cycle and the 1000th cycle were measured, and the capacity retention rate was determined from the following equation, and was used as an indicator of the cycle characteristics.

Capacity retention rate (%) = ((discharge capacity at 70th cycle or 1000th cycle)/discharge capacity at 1st cycle) $\times$ 100

(c) High-temperature cycle characteristics

Each battery was tested in the same manner as described in (b) above except that the temperature was changed from 25°C to 45°C, and the discharge capacities at the 1st cycle and the 1000th cycle were measured. From the measured values of the discharge capacity, the capacity retention rate was determined in the same manner as described in (b) above, and used as an indicator of the high-temperature cycle characteristics.

(d) Amount of gas generated after storage at high temperature

For the batteries of Example 1, Comparative Examples 6 and 7, as well as Reference Example 2, the amount of gas generated after storage at a high temperature was evaluated according to the following procedure.

After the batteries had been stored in an environment at 80°C for 72 hours, the amount of gas generated in each of the batteries was examined. The amount of gas generated in each of the examples was expressed as a relative value (volumetric basis), with the amount of gas generated in Reference Example 2 taken as 100.

The results of the examples, the comparative example, and the reference examples are shown in Table 1. In Table 1, E1 to E11 correspond to Examples 1 to 11, C1 to C7 correspond to Comparative Examples 1 to 7, and R1 to R2 correspond to Reference Examples 1 to 2.

[Table 1]

| | Negative electrode active material | | Non-aqueous electrolyte | | | | Initial negative electrode resistance value (%) | Cycle characteristics (%) | | High-temperature cycle characteristics (%) |
|---|---|---|---|---|---|---|---|---|---|---|
| | Composite particles | Graphite | Heterocyclic compound | | Fluorine-containing cyclic carbonate | | | | | |
| | mass% | mass% | Type | mass% | Type | mass% | | 70 cycles | 1000 cycles | 1000 cycles |
| E1 | 8 | 92 | PAD | 1 | FEC | 2 | -16 | 98.4 | 85 | 75 |
| E2 | | | TAD | 1 | FEC | 2 | -8 | 98.2 | 83 | 72 |
| E3 | | | TET | 1 | FEC | 2 | -13 | 98.2 | 84 | 73 |
| E4 | | | TPYT | 1 | FEC | 2 | -16 | 98.4 | 85 | 74 |
| E5 | | | TPAT | 1 | FEC | 2 | -17 | 98.4 | 86 | 75 |

(continued)

| | Negative electrode active material | | Non-aqueous electrolyte | | | | Initial negative electrode resistance value (%) | Cycle characteristics (%) | | High-temperature cycle characteristics (%) |
|---|---|---|---|---|---|---|---|---|---|---|
| | Composite particles | Graphite | Heterocyclic compound | | Fluorine-containing cyclic carbonate | | | | | |
| | mass% | mass% | Type | mass% | Type | mass% | | 70 cycles | 1000 cycles | 1000 cycles |
| C1 | 8 | 92 | 1,3,5-trioxane | 1 | FEC | 2 | +0.5 | 97.8 | 71 | 61 |
| C2 | | | 1,3,5-trithiane | 1 | FEC | 2 | -5 | 97.8 | 72 | 63 |
| C3 | | | PAD | 1 | - | 0 | -11 | 97.7 | 69 | 66 |
| C4 | | | 1,3,5-trioxane | 1 | - | 0 | +0 | 96.9 | 63 | 62 |
| R1 | 8 | 92 | - | 0 | FEC | 2 | 0 | 98.1 | 78 | 69 |

As shown in Table 1, in the case of using the negative electrodes including the composite particles, the initial negative electrode resistance is increased, or reduced only in a small range (comparison of C1 and C2 with R1) even when the non-aqueous electrolytes including 1,3,5-trioxane or 1,3,5-trithiane and the fluorine-containing cyclic carbonate (FEC) are used. The cycle characteristics and the high-temperature cycle characteristics of C1 and C2 are lower than those of R1, which uses neither 1,3,5-trioxane nor 1,3,5-trithiane.

In contrast, in the case of E1 to E5 according to the examples, the initial negative electrode resistance can be significantly reduced by using the non-aqueous electrolytes including the heterocyclic compound (I) and the fluorine-containing cyclic carbonate (FEC), in spite of using the negative electrodes including the composite particles. In addition, E1 to E5 can provide higher cycle characteristics and higher high-temperature cycle characteristics than those provided by R1, which does not use the heterocyclic compound (I).

From the results of C3, which uses the heterocyclic compound (I) and does not use the fluorine-containing cyclic carbonate, and the results of R1, which does not use the heterocyclic compound (I) and uses a fluorine-containing cyclic carbonate, it is expected that the cycle characteristics and high-temperature cycle characteristics obtained when the two components are used are approximately the average of those of C3 and R1. However, the cycle characteristics and high-temperature cycle characteristics obtained when the two materials were actually used are significantly improved (E1) from the values expected from C3 and R1. That is, it can be seen that a synergistic effect can be achieved by the combined use of the two components.

Note that in the case of 1,3,5-trioxane, even when used in combination with the fluorine-containing cyclic carbonate, the capacity retention rate after the 1000th cycle is improved by +8%, and the high-temperature cycle characteristics are reduced by 1% (comparison between C1 and C4). In contrast, in the case of PAD, the capacity retention rate after the 1000th cycle when used in combination with the fluorine-containing cyclic carbonate is improved by +16%, and the high-temperature cycle characteristics are improved by +9% (comparison between E1 and C3). As such, the heterocyclic compound (I) and 1,3,5-trioxane are similar in structure, but are completely different in behaviors of the cycle characteristics and high-temperature cycle characteristics obtained when these components are used in combination with the fluorine-containing cyclic carbonate.

[Table 2]

| | Negative electrode active material | | Non-aqueous electrolyte | | | | Initial negative electrode resistance value (%) | Cycle characteristics (%) | | High-temperature cycle characteristics (%) |
|---|---|---|---|---|---|---|---|---|---|---|
| | Composite particles | Graphite | Heterocyclic compound | | Fluorine-containing cyclic carbonate | | | | | |
| | mass% | mass% | Type | mass% | Type | mass% | | 70 cycles | 1000 cycles | 1000 cycles |
| E6 | 8 | 92 | PAD | 1 | FEC | 0.5 | -12 | 98.2 | 83 | 73 |
| E1 | | | | | | 2 | -16 | 98.4 | 85 | 75 |
| E7 | | | | | | 3 | -12 | 98.4 | 85 | 75 |
| E8 | | | | | | 5 | -11 | 98.6 | 85 | 74 |
| E9 | | | | | | 10 | -8 | 98.6 | 86 | 72 |
| C5 | 8 | 92 | - | 0 | FEC | 10 | +7 | 98.1 | 80 | 62 |
| R1 | 8 | 92 | - | 0 | FEC | 2 | 0 | 98.1 | 78 | 69 |

As shown in Table 2, in the case of using the heterocyclic compound (I) and the fluorine-containing cyclic carbonate in combination, the effects similar to that of E1 can be achieved even when the concentration of the fluorine-containing cyclic carbonate is changed (E6 to E9). In the case of using the fluorine-containing cyclic carbonate without using the heterocyclic compound (I), the high-temperature cycle characteristics tend to be reduced when the concentration of the fluorine-containing cyclic carbonate is increased (comparison between R1 and C5). In contrast, in the case of using the heterocyclic compound (I) and the fluorine-containing cyclic carbonate in combination, even when the concentration of the fluorine-containing cyclic carbonate is relatively high, excellent high-temperature cycle characteristics and excellent cycle characteristics can be obtained (comparison between R1 and E1, and between C5 and E9).

[Table 3]

| | Negative electrode active material | | Non-aqueous electrolyte | | | | Initial negative electrode resistance value (%) | Cycle characteristics (%) | | High-temperature cycle characteristics (%) |
|---|---|---|---|---|---|---|---|---|---|---|
| | Composite particles | Graphite | Heterocyclic compound | | Fluorine-containing cyclic carbonate | | | | | |
| | mass% | mass% | Type | mass% | Type | mass% | | 70 cycles | 1000 cycles | 1000 cycles |
| E10 | 3 | 97 | PAD | 1 | FEC | 2 | -15 | 98.4 | 88 | 81 |
| E11 | 5 | 95 | | | | | -14 | 98.4 | 87 | 80 |
| E1 | 8 | 92 | | | | | -16 | 98.4 | 85 | 75 |
| R1 | 8 | 92 | - | 0 | FEC | 2 | 0 | 98.1 | 78 | 69 |
| C6 | 0 | 100 | PAD- | 1 | FEC | 2 | -10 | 97.5 | 79 | 69 |
| C7 | | | | | - | 0 | -15 | 96.9 | 75 | 63 |
| R2 | 0 | 100 | - | 0 | FEC | 2 | 0 | 98.3 | 84 | 75 |

As shown in Table 3, in the case of the negative electrode active materials including only the carbonaceous material, even when the heterocyclic compound (I) is used for the non-aqueous electrolyte, the cycle characteristics and the high-temperature cycle characteristics are lower than those obtained when the heterocyclic compound (I) is not used (comparison of R2 with C6 and C7). In contrast, in the case of the negative electrode active materials including the composite particles, the cycle characteristics and the high-temperature cycle characteristics are both improved by using the heterocyclic compound (I), as compared with the case where the heterocyclic compound (I) is not used. In the case of the negative electrode active materials including only the carbonaceous material, C6, which uses both the heterocyclic compound (I) and the fluorine-containing cyclic carbonate, provides cycle characteristics and high-temperature cycle

characteristics that are close to the average value of the results of C7 and R2, which use one of these components. That is, in the case of the negative electrode active material including only the carbonaceous material, the synergistic effect achieved in the case of using the composite particles, as described in relation to Table 1, cannot be achieved. As such, it can be said that the negative electrode active material including only the carbonaceous material, and the negative electrode active material including the composite particles provide completely different behaviors of the cycle characteristics and the high-temperature cycle characteristics by the combined use of the heterocyclic compound (I) and the fluorine-containing cyclic carbonate.

[Table 4]

| | Negative electrode active material | | Non-aqueous electrolyte | | | | Cycle characteristics(%) | High-temperature cycle characteristics (%) | Amount of gas generated after storage at high temperature (%) |
|---|---|---|---|---|---|---|---|---|---|
| | Composite particles | Graphite | Heterocyclic compound | | Fluorine-containing cyclic carbonate | | | | |
| | mass% | mass% | Type | mass% | Type | mass% | 1000 cycles | 1000 cycles | |
| E1 | 8 | 92 | PAD | 1 | FEC | 2 | 85 | 75 | 72 |
| C6 | 0 | 100 | PAD | 1 | FEC | 2 | 79 | 69 | 95 |
| C7 | | | | | | 0 | 75 | 63 | 92 |
| R2 | 0 | 100 | - | 0 | FEC | 2 | 84 | 75 | 100 |

As shown in Table 4, in the case of the negative electrode active materials including only the carbonaceous material, the amount of gas generated after storage at a high temperature of 80°C cannot be reduced very much even when both the heterocyclic compound (I) and the fluorine-containing cyclic carbonate are used (comparison between R2 and C6). However, in the case of the negative electrode active material including the composite particles, the amount of gas generation is significantly reduced when the heterocyclic compound (I) and the fluorine-containing cyclic carbonate are used (comparison between R2 and E1). It is considered that in the case of the negative electrode active material including the composite particles, a large amount of fresh surfaces are formed as compared with the case of the negative electrode active material including only the carbonaceous material. However, it seems that, even in such a case, high-quality coatings were formed on fresh surfaces of the composite particles by the action between the heterocyclic compound (I) and the fluorine-containing cyclic carbonate, thus suppressing side reactions and reducing the amount of gas generation even after storage in an high-temperature environment.

[Industrial Applicability]

The non-aqueous electrolyte secondary battery according to the present disclosure is useful as a main power source for mobile communication devices, mobile electronic device, and the like. However, these are merely examples, and the uses of the non-aqueous electrolyte secondary battery are not limited thereto.

[Reference Signs List]

1: Electrode group
2: Positive electrode lead
3: Negative electrode lead
4: Battery case
5: Sealing plate
6: Negative electrode terminal
7: Gasket
8: Sealing plug

## Claims

**1.** A non-aqueous electrolyte secondary battery comprising:

a negative electrode including a negative electrode mixture;
a separator;
a positive electrode opposed to the negative electrode with the separator interposed between the negative electrode and the positive electrode; and
a non-aqueous electrolyte,
wherein the negative electrode mixture includes a negative electrode active material,
the negative electrode active material includes composite particles each including a matrix phase, and a silicon phase dispersed in the matrix phase, and
the non-aqueous electrolyte includes:

a heterocyclic compound represented by the following formula:

[Chem. 1]

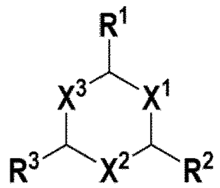

(I)

where $X^1$, $X^2$, and $X^3$ are each an oxygen element or a sulfur element, and $R^1$, $R^2$, and $R^3$ are each an alkyl

group having 1 to 5 carbon atoms; and
a fluorine-containing cyclic carbonate.

2. The non-aqueous electrolyte secondary battery according to claim 1, wherein a concentration of the heterocyclic compound in the non-aqueous electrolyte is 3 mass% or less.

3. The non-aqueous electrolyte secondary battery according to claim 1 or 2, wherein the heterocyclic compound includes at least one selected from the group consisting of paraldehyde, trithioacetaldehyde, 2,4,6-triethyl-1,3,5-trioxane, 2,4,6-tripropyl-1,3,5-trioxane, and 2,4,6-tris(propane-2-yl)-1,3,5-trioxane.

4. The non-aqueous electrolyte secondary battery according to any one of claims 1 to 3, wherein the fluorine-containing cyclic carbonate includes a fluorinated ethylene carbonate.

5. The non-aqueous electrolyte secondary battery according to any one of claims 1 to 4, wherein the non-aqueous electrolyte includes a cyclic carbonate having a carbon-carbon unsaturated bond.

6. The non-aqueous electrolyte secondary battery according to any one of claims 1 to 5, wherein the non-aqueous electrolyte includes lithium difluorophosphate.

7. The non-aqueous electrolyte secondary battery according to any one of claims 1 to 6, wherein the matrix phase includes at least one selected from the group consisting of a $SiO_2$ phase, a silicate phase, and a carbon phase.

8. The non-aqueous electrolyte secondary battery according to any one of claims 1 to 7, wherein a content of the composite particles in the negative electrode active material is 1 mass% or more and 10 mass% or less.

9. The non-aqueous electrolyte secondary battery according to any one of claims 1 to 8, wherein a concentration of the fluorine-containing cyclic carbonate in the non-aqueous electrolyte is 0.01 mass% or more.

## Patentansprüche

1. Sekundärbatterie mit nichtwässrigem Elektrolyt, umfassend:

eine negative Elektrode, die eine negative Elektrodenmischung umfasst;
einen Separator;
eine positive Elektrode, die der negativen Elektrode gegenüberliegt, wobei der Separator zwischen der negativen Elektrode und der positiven Elektrode eingefügt ist; und
einen nichtwässrigen Elektrolyten,
wobei die negative Elektrodenmischung ein negatives Elektrodenaktivmaterial umfasst,
das negative Elektrodenaktivmaterial Kompositpartikel umfasst, die jeweils eine Matrixphase und eine in der Matrixphase dispergierte Siliziumphase umfassen, und
der nichtwässrige Elektrolyt umfasst:

eine heterocyclische Verbindung, dargestellt durch die folgende Formel:

[Chem. 1]

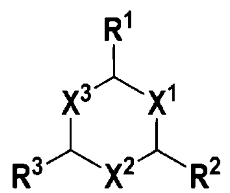

(I)

worin X1, X2 und X3 jeweils ein Sauerstoffelement oder ein Schwefelelement sind und R1, R2 und R3 jeweils eine Alkylgruppe mit 1 bis 5 Kohlenstoffatomen sind; und

ein fluorhaltiges cyclisches Carbonat.

2. Sekundärbatterie mit nichtwässrigem Elektrolyt nach Anspruch 1, wobei eine Konzentration der heterocyclischen Verbindung in dem nichtwässrigen Elektrolyten 3 Masse-% oder weniger beträgt.

3. Sekundärbatterie mit nichtwässrigem Elektrolyt nach Anspruch 1 oder 2, wobei die heterocyclische Verbindung mindestens eine Verbindung umfasst, die aus der Gruppe ausgewählt ist, die aus Paraldehyd, Trithioacetaldehyd, 2,4,6-Triethyl-1,3,5-trioxan, 2,4,6-Tripropyl-1,3,5-trioxan und 2,4,6-Tris(propan-2-yl)-1,3,5-trioxan besteht.

4. Sekundärbatterie mit nichtwässrigem Elektrolyt nach einem der Ansprüche 1 bis 3, wobei das fluorhaltige cyclische Carbonat ein fluoriertes Ethylencarbonat umfasst.

5. Sekundärbatterie mit nichtwässrigem Elektrolyt nach einem der Ansprüche 1 bis 4, wobei der nichtwässrige Elektrolyt ein cyclisches Carbonat mit einer Kohlenstoff-Kohlenstoff-ungesättigte Bindung umfasst.

6. Sekundärbatterie mit nichtwässrigem Elektrolyt nach einem der Ansprüche 1 bis 5, wobei der nichtwässrige Elektrolyt Lithiumdifluorphosphat umfasst.

7. Sekundärbatterie mit nichtwässrigem Elektrolyt nach einem der Ansprüche 1 bis 6, wobei die Matrixphase mindestens eine Phase umfasst, die aus der Gruppe ausgewählt ist, die aus einer SiO2-Phase, einer Silikatphase und einer Kohlenstoffphase besteht.

8. Sekundärbatterie mit nichtwässrigem Elektrolyt nach einem der Ansprüche 1 bis 7, wobei ein Gehalt der Kompositpartikel in dem negativen Elektrodenaktivmaterial 1 Masse-% oder mehr und 10 Masse-% oder weniger beträgt.

9. Sekundärbatterie mit nichtwässrigem Elektrolyt nach einem der Ansprüche 1 bis 8, wobei eine Konzentration des fluorhaltigen cyclischen Carbonats in dem nichtwässrigen Elektrolyten 0,01 Masse-% oder mehr beträgt.

## Revendications

1. Batterie secondaire à électrolyte non aqueux comprenant :

une électrode négative comprenant un mélange d'électrode négative ;
un séparateur ;
une électrode positive opposée à l'électrode négative, le séparateur étant interposé entre l'électrode négative et l'électrode positive ; et
un électrolyte non aqueux,
dans laquelle le mélange d'électrode négative comprend un matériau actif d'électrode négative,
le matériau actif d'électrode négative comprend des particules composites comprenant chacune une phase matrice et une phase silicium dispersée dans la phase matrice, et
l'électrolyte non aqueux comprend :

un composé hétérocyclique représenté par la formule suivante :

[Chem. 1]

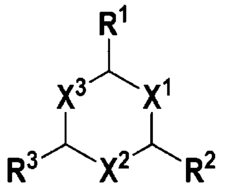

(I)

où X1, X2 et X3 sont chacun un élément oxygène ou un élément soufre, et R1, R2 et R3 sont chacun un groupe alkyle ayant 1 à 5 atomes de carbone ; et
un carbonate cyclique contenant du fluor.

2. Batterie secondaire à électrolyte non aqueux selon la revendication 1, dans laquelle une concentration du composé hétérocyclique dans l'électrolyte non aqueux est de 3 % en masse ou moins.

3. Batterie secondaire à électrolyte non aqueux selon la revendication 1 ou 2, dans laquelle le composé hétérocyclique comprend au moins un composé sélectionné dans le groupe constitué par le paraldéhyde, le trithioacétaldéhyde, la 2,4,6-triéthyl-1,3,5-trioxane, la 2,4,6-tripropyl-1,3,5-trioxane et la 2,4,6-tris(propane-2-yl)-1,3,5-trioxane.

4. Batterie secondaire à électrolyte non aqueux selon l'une quelconque des revendications 1 à 3, dans laquelle le carbonate cyclique contenant du fluor comprend un carbonate d'éthylène fluoré.

5. Batterie secondaire à électrolyte non aqueux selon l'une quelconque des revendications 1 à 4, dans laquelle l'électrolyte non aqueux comprend un carbonate cyclique ayant une liaison insaturée carbone-carbone.

6. Batterie secondaire à électrolyte non aqueux selon l'une quelconque des revendications 1 à 5, dans laquelle l'électrolyte non aqueux comprend du difluorophosphate de lithium.

7. Batterie secondaire à électrolyte non aqueux selon l'une quelconque des revendications 1 à 6, dans laquelle la phase matrice comprend au moins une phase sélectionnée dans le groupe constitué par une phase SiO2, une phase silicate et une phase carbone.

8. Batterie secondaire à électrolyte non aqueux selon l'une quelconque des revendications 1 à 7, dans laquelle une teneur en particules composites dans le matériau actif d'électrode négative est de 1 % en masse ou plus et de 10 % en masse ou moins.

9. Batterie secondaire à électrolyte non aqueux selon l'une quelconque des revendications 1 à 8, dans laquelle une concentration du carbonate cyclique contenant du fluor dans l'électrolyte non aqueux est de 0,01 % en masse ou plus.

FIG. 1

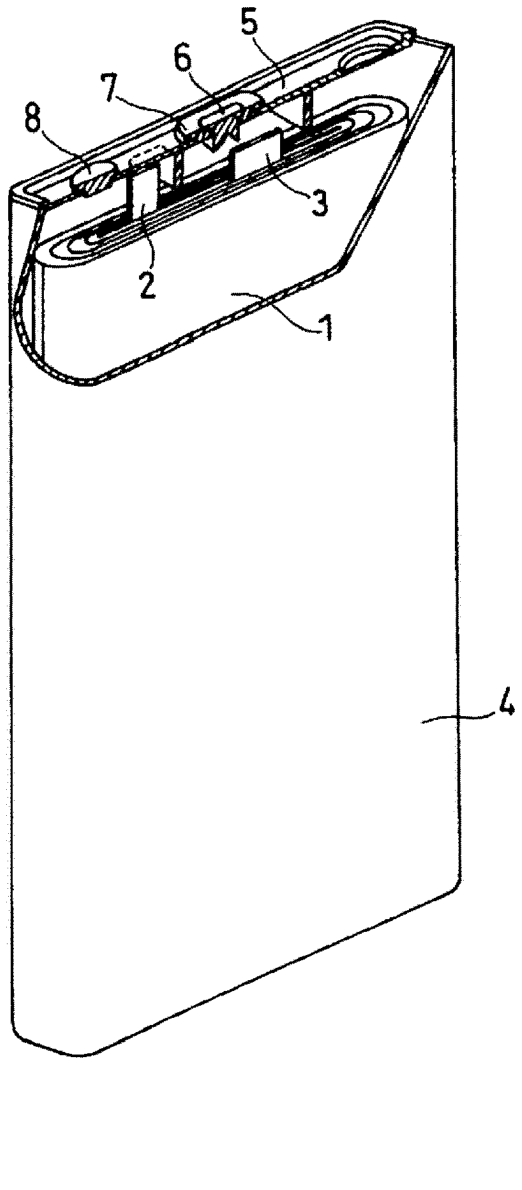

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2014049931 A
- JP 2007141494 A
- US 2017317380 A1